# FASCICULE DE BREVET EUROPEEN

(11) **EP 2 881 923 B1**
(45) Date de publication et mention de la délivrance du brevet: **27.11.2019**
(21) Numéro de dépôt: 14195287.9
(22) Date de dépôt: 27.11.2014
(51) Int. Cl.: G08C 17/02, H04L 12/28

(54) **SYSTÈME DOMOTIQUE UNIVERSEL**
UNIVERSELLES HAUS- UND HEIMSYSTEM
UNIVERSAL HOME-AUTOMATION SYSTEM

(30) Priorité: 03.12.2013 FR 1362050
(43) Date de publication de la demande: 10.06.2015
(73) Titulaire: Orange, 75015 Paris (FR)
(72) Inventeur: Delbary, Philippe, 75014 Paris (FR); Prouvost, Denis, 75010 Paris (FR); Moinecourt, Olivier, 92120 Montrouge (FR)

(56) Documents cités:
- WO-A1-2004/028090
- WO-A2-00/46965
- WO-A2-2006/046247

## Description

La présente invention concerne la communication au sein d'un système domotique.

Un exemple d'un tel système domotique est présenté dans le document WO2013/088035.

Un tel système nécessite la mise en réseau d'un appareil électrique (tel qu'un moteur de volets électriques, ou une caméra de surveillance, un détecteur de gaz, d'ouverture de porte, ou encore un régulateur de chauffage, etc.) avec une centrale intelligente programmable, de commande de l'un de ces appareils. Par exemple, cette centrale intelligente peut communiquer ensuite avec un terminal (par exemple un smartphone, avec des données au format GPRS par exemple et transmises via un réseau cellulaire). Le terminal précité peut piloter à distance l'ouverture des volets, ou la régulation du chauffage, ou autres, en envoyant des consignes choisies par l'utilisateur du terminal et à destination de la centrale intelligente, laquelle traduit ces consignes et envoie des commandes correspondantes à l'un des appareils électriques précités. De même, le terminal peut recevoir de la centrale une alerte pour une ouverture de porte non attendue, ou une émanation gazeuse dangereuse (monoxyde de carbone, fumées, etc.), issue d'un appareil électrique détecteur d'une telle situation.

A cet effet, une implémentation pratique consiste à prévoir une communication entre cette centrale intelligente et un module de communication de l'un de ces appareils. Par exemple, la centrale peut être branchée sur une prise électrique commune à laquelle se branche l'appareil et la centrale envoie des consignes ou reçoit des signaux par courants porteurs en ligne vers ou depuis un module de communication de l'appareil. Une autre réalisation dans laquelle par exemple un détecteur de gaz est mobile et alimenté par pile impose par ailleurs une communication sans fil d'un module de communication du détecteur avec une centrale associée.

Ainsi, chacun de ces appareils électriques est conçu par un constructeur particulier, et son module de communication peut avoir des spécificités propres, comme par exemple :
- le type de médium de communication utilisé (par liaison radiofréquence sans fil; ou par liaison filaire par exemple par courants porteurs en ligne, si l'appareil électrique et la centrale intelligente sont connectés au réseau électrique domestique) ;
- le protocole de communication qu'il utilise en réseau local avec la centrale intelligente (en liaison sans fil par exemple, par Wi-Fi, ou Zigbee, ou Bluetooth, ou autre) ;
- le format des données (longueur de trames de signal par exemple, nombre de sous-trames, etc.).
- etc.

Or, pour piloter deux appareils électriques ayant des protocoles de communication différents et/ou des média de communication différents, il faudrait prévoir autant de centrales intelligentes capables chacune de communiquer avec l'un des appareils électriques. Avec le succès rencontré par les systèmes domotiques, le nombre d'appareils domestiques dans une habitation est croissant aujourd'hui. Néanmoins, il n'est pas souhaitable de multiplier pour autant le nombre de centrales intelligentes dans l'habitation, pour des questions d'encombrement, pour des questions de coût, et de complication de mise en œuvre.

La présente invention vient améliorer la situation.

Elle propose à cet effet de ne conserver qu'une unique centrale intelligente (appelée ci-après « dispositif de commande ») mais capable de communiquer avec une pluralité d'appareils électriques (appelés ci-après « équipements domotiques ») et selon au moins deux formes de communication. On entend ci-après par « forme de communication » l'un quelconque des éléments ci-avant parmi un protocole de communication, un médium de communication, un format des données communiquées, etc.

Le fonctionnement d'une telle centrale est par exemple décrit dans la publication WO 2004/028090.

Ainsi, l'invention propose un procédé de mise en communication d'équipements domotiques avec un réseau étendu, dans lequel au moins un premier équipement domotique est mis en communication avec un réseau étendu, via un dispositif de commande comportant un premier module de communication avec le premier équipement selon une première forme de communication. En particulier, le procédé comporte les étapes ci-après, mises en œuvre par le dispositif de commande lorsqu'il est relié à un deuxième module de communication, additionnel, pour communiquer avec un deuxième équipement domotique selon une deuxième forme de communication et pour une mise en communication du deuxième équipement domotique au réseau étendu :
- sur réception de données du réseau étendu, identifier un destinataire desdites données parmi le premier et le deuxième équipement, et
   ∘ sur identification du deuxième équipement en tant que destinataire des données, mettre en œuvre le deuxième module pour communiquer lesdites données au deuxième équipement selon ladite deuxième forme de communication,
   ∘ sur identification du premier équipement en tant que destinataire des données, mettre en œuvre le premier module pour communiquer lesdites données au premier équipement selon ladite première forme de communication.

Ainsi, l'invention propose d'utiliser les mêmes ressources que comporte un dispositif de commande pour être relié à un réseau étendu, et ce pour communiquer avec plusieurs équipements domotiques d'une habitation. Dès lors, il suffit d'assurer une liaison (par courants porteurs en ligne, ou par radiofréquence en protocole Wi-Fi, Bluetooth, Zigbee, Z-Wave ou autres) entre le dispositif de commande et autant de modules de communication que d'équipements domotiques dans l'habitation.

Grâce à cette disposition, il est possible de transmettre des consignes de commande, par exemple, aux équipements. Il est possible aussi de recevoir des données des équipements et plus particulièrement, le procédé comporte en outre, dans une forme de réalisation, les étapes ci-après, mises en œuvre sur réception de données issues de l'un des premier et deuxième équipements :
- reconnaissance d'une forme de communication parmi les première et deuxième formes de communication, et
   ∘ sur reconnaissance de la deuxième forme de communication, une mise en œuvre du deuxième module pour communiquer lesdites données au réseau étendu,
   ∘ sur reconnaissance de la première forme de communication, une mise en œuvre du premier module pour communiquer lesdites données au réseau étendu.

Dans un exemple de réalisation, les première et deuxième formes de communication peuvent différer par au moins un élément parmi un type de médium de communication utilisé, un protocole de communication, un format des données communiquées.

Par exemple, l'une des première et deuxième formes de communication peut utiliser un médium de type courants porteurs en ligne, tandis que l'autre des première et deuxième formes de communication utilise un médium de type radiofréquence.

Dans un autre exemple, les première et deuxième formes de communication peuvent utiliser un médium de type radiofréquence, mais l'une des première et deuxième formes de communication utilise un protocole parmi Wi-Fi, Zigbee, Bluetooth, tandis que l'autre des première et deuxième formes de communication utilise un autre protocole parmi Wi-Fi, Zigbee, Bluetooth.

En complément ou en variante, la première forme de communication peut utiliser un premier format de données, propre à un constructeur du premier équipement, tandis que la deuxième forme de communication utilise un deuxième format de données, propre à un constructeur du deuxième équipement, et différent du premier format. Dans ce cas encore, chaque module de communication a sa propre spécificité d'interprétation des données destinées au ou reçues du réseau étendu.

Dans une forme de réalisation, le dispositif de commande peut comporter un module de formatage de données issues du premier équipement pour être transmises au réseau étendu. Dans ce cas, il peut être avantageux de munir le deuxième module de communication d'un module d'adaptation des données issues du deuxième équipement pour être interprétées par le module de formatage pour une transmission au réseau étendu (un module informatique d'adaptation, typiquement). Par exemple, ce module peut avantageusement traduire les données d'un protocole de communication radiofréquence avec le deuxième équipement (par exemple Zigbee), en un protocole de communication radiofréquence du premier équipement (par exemple Wi-Fi), et, le dispositif de commande comportant un module de formatage des données selon le protocole de communication radiofréquence du premier équipement (Zigbee) en des données aptes à être transmises sur le réseau étendu (GPRS par exemple), le module d'adaptation précité traduit les données (par exemple de Zigbee à Wi-Fi) pour être directement formatées (de Wi-Fi à GPRS) pour être transmises via le réseau étendu.

Dans une forme de réalisation où le format des données est propre à chaque constructeur d'un équipement parmi les premier et deuxième équipements, si les données issues du dispositif de commande et transmises via le réseau étendu peuvent être reçues auprès d'un serveur principal capable de transmettre les données issues du premier équipement à un serveur d'un constructeur du premier équipement, alors on prévoit avantageusement que ce serveur principal comporte un module d'adaptation des données issues du deuxième équipement pour être communiquées selon le deuxième format à un serveur d'un constructeur du deuxième équipement.
Ainsi, grâce à cette disposition, le dispositif de commande est capable de communiquer avec une pluralité d'équipements domotiques, mais aussi avec une pluralité respective de serveurs de constructeurs de ces équipements. Par exemple, si l'un des équipements est un détecteur (comportant un capteur relevant un niveau de monoxyde de carbone), la donnée relevée peut être transmise directement au serveur du constructeur de cet équipement, pour y être interprétée, et ce dernier peut renvoyer, si nécessaire, une consigne de réétalonnage du détecteur par exemple. On comprendra ainsi que grâce aux dispositions de l'invention selon ce mode de réalisation, le dispositif de commande est capable de rendre fluide la communication entre chaque équipement domotique d'un logement ou d'un local, et le serveur géré par le constructeur de cet équipement. En outre, il est possible pour un constructeur de recouper des informations issues de plusieurs équipements domotiques d'une même habitation ou d'un même local, si les données issues de ces équipements sont interprétables par un serveur géré par ce constructeur.

Avantageusement, le serveur principal peut être agencé en outre pour adapter les données reçues du dispositif de commande pour une communication de ces données à un terminal (par exemple via un réseau cellulaire) à disposition d'un utilisateur des premier et deuxième équipements.
Ainsi, dans le cas où ces équipements sont des détecteurs par exemple, l'utilisateur peut recevoir une alerte éventuelle sur son terminal, ou à l'inverse, envoyer des consignes depuis son terminal et à destination des équipements.

Dans une forme de réalisation pratique, le deuxième module de communication, additionnel, peut être rendu opérationnel par une connexion à une alimentation électrique, de type USB.
Par exemple, s'il s'agit d'un module de communication par liaison radiofréquence, ce module additionnel peut être implanté dans une « clé USB » comportant d'une part une connexion USB à une alimentation électrique, et d'autre part une antenne de communication radiofréquence. En outre, cette « clé » peut comporter des moyens informatiques tels qu'une mémoire et un processeur pour traiter les données à transmettre, notamment pour une adaptation comme présenté ci-avant.

A cet effet, le dispositif de commande peut comporter une prise femelle pour une connexion de type USB pour accueillir la connexion du deuxième module, de sorte que le deuxième module communique avec le dispositif de commande par la connexion USB.

En variante, le deuxième module peut communiquer avec le dispositif de commande par une liaison radiofréquence (par exemple une liaison de courte portée de type Bluetooth).
Un autre mode de réalisation peut consister aussi à alimenter le deuxième module par une connexion USB dans une prise femelle que comporte le deuxième équipement (une connexion sur le deuxième équipement, prévue avantageusement à cet effet) et à équiper un support du deuxième module d'une antenne radiofréquence pour faire transiter par une liaison radiofréquence (par exemple WiFi ou Zigbee) les données échangées entre le deuxième module et le dispositif de commande.

Dans une autre variante encore où le deuxième équipement comporte une prise femelle pour une connexion de type USB pour accueillir le deuxième module, le deuxième module peut communiquer avec le dispositif de commande par courants porteurs en ligne.

Dès lors que le dispositif de commande présente les avantages ci-avant lorsqu'un module de communication additionnel lui est connecté, la présente invention vise aussi un dispositif de commande pour mettre en œuvre le procédé ci-avant, et comportant en particulier un module de liaison avec le deuxième module de communication, additionnel.

Ce module de liaison peut être informatique (par exemple pour interpréter auprès du dispositif de commande des données issues du module additionnel) et/ou matériel (par exemple une connexion USB ou une antenne radiofréquence comme indiqué ci-avant, pour échanger des données avec le module additionnel).

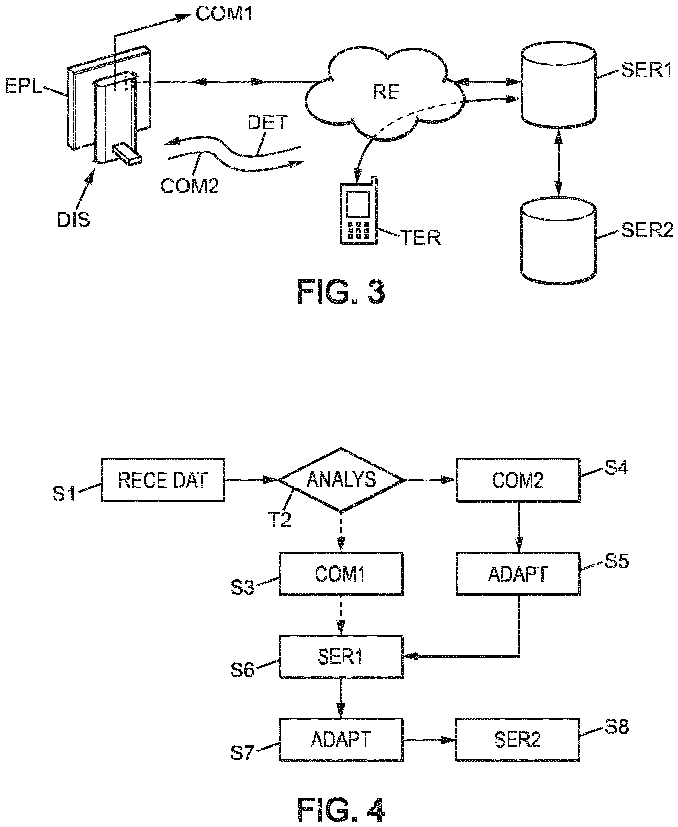

La présente invention vise aussi un programme informatique comportant des instructions pour la mise en œuvre du procédé ci-avant, lorsque ce programme est exécuté par un processeur (par exemple un processeur d'un dispositif de commande, notamment pour déterminer la forme de communication des données reçues et orienter ces données vers le module de communication approprié). La figure 4 commentée ci-après illustre un organigramme possible d'un algorithme général d'un tel programme.

D'ailleurs, d'autres caractéristiques et avantages de l'invention apparaîtront à l'examen de la description détaillée ci-après, et des dessins annexés sur lesquels :
- la figure 1 illustre un exemple de réalisation d'une installation comportant un dispositif de commande DIS selon l'invention ;
- la figure 2 illustre une forme de réalisation du dispositif au sens de l'invention ;
- la figure 3 illustre un exemple de réalisation d'une communication avec un ou plusieurs serveurs via un réseau étendu ;
- la figure 4 illustre les principales étapes d'un procédé selon un exemple de réalisation de la présente invention ;
- la figure 5 illustre une forme de réalisation du dispositif de l'invention, dans une variante de la forme représentée sur les figures 1 et 2.

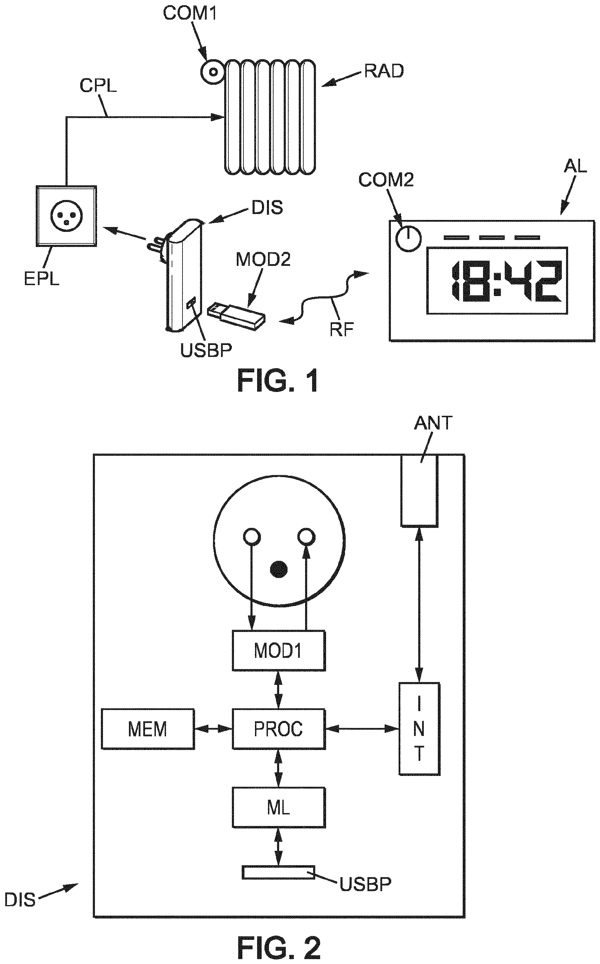

On se réfère à la figure 1 sur laquelle un dispositif DIS au sens de l'invention comporte des moyens de connexion à une prise d'alimentation électrique EPL d'un local domestique ou industriel, pour être connecté à ladite prise EPL. Dans l'exemple représenté sur la figure 1, un premier module de commande COM1 permet de piloter le fonctionnement d'un équipement tel qu'un ou plusieurs radiateurs RAD de chauffage du local. Un deuxième module de commande COM2 permet de gérer le fonctionnement d'un autre équipement du local tel que par exemple un dispositif de détection AL (d'intrusion, d'émanation de gaz, ou autres) capable de générer une alerte en cas de détection d'un risque dans le local.

Le dispositif DIS comporte alors des moyens de communication avec les premier et deuxième modules de commande COM1 et COM2 pour réaliser un point de commande centralisé des équipements RAD et AL.

A cet effet, en référence à la figure 2, le dispositif DIS comporte, outre un processeur PROC apte à coopérer avec une ou plusieurs mémoires de travail et stockage MEM :
- un premier module de communication MOD1 capable de communiquer par courants porteurs en ligne CPL, dans l'exemple représenté, avec le premier module de commande COM1,
- et, au sens de l'invention, un module de liaison ML destiné à communiquer avec un deuxième module de communication MOD2, lequel est capable de communiquer avec le deuxième module de commande COM2, par liaison radiofréquence RF dans l'exemple représenté.

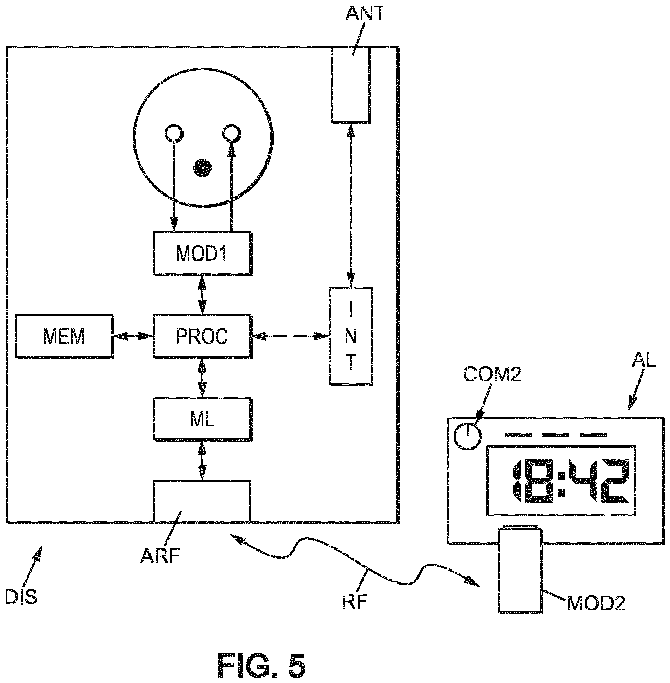

Dans l'exemple de la figure 2, le dispositif DIS comporte une prise femelle USBP, de type USB, pour accueillir la connexion du deuxième module de communication MOD2. Ainsi, le deuxième module de communication MOD2 peut communiquer avec le dispositif DIS par cette connexion USB. Dans la variante de la figure 5, l'équipement AL comporte lui-même une prise femelle USBP, de type USB, pour accueillir la connexion du deuxième module de communication MOD2, tandis que le dispositif DIS comporte un moyen de communication ARF (une antenne radiofréquence par exemple) connectée au module de liaison ML.

Ainsi, de façon générale et dans les deux exemples de réalisation représentés sur les figures 2 et 5, le dispositif DIS est connecté au deuxième module de commande COM2 de l'équipement AL via le module de liaison ML et le module de communication MOD2, ainsi qu'un lien radiofréquence RF.

La communication radiofréquence entre le dispositif DIS et le module de commande COM2 peut s'effectuer selon un protocole tel que Zigbee, ou par Wi-Fi ou Bluetooth.

Le dispositif comporte en outre une interface de communication INT avec un réseau étendu RE (figure 3), tel que le réseau Internet. Cette interface est reliée par exemple à une antenne ANT pour une communication cellulaire (via un réseau LTE ou GSM ou GPRS, ou autre) via le réseau étendu RE. Ainsi, en référence à la figure 3, le dispositif DIS peut communiquer avec un ou plusieurs serveurs SER1, SER2, via le réseau étendu RE. L'un au moins de ces serveurs peut en outre communiquer avec un terminal mobile TER à disposition d'un utilisateur du dispositif DIS, par exemple l'un des occupants du local précité.

Ainsi, l'utilisateur du terminal TER peut transmettre des consignes de commande, par exemple du radiateur RAD, au dispositif DIS, via l'un des serveurs SER1 ou directement via l'interface de communication INT précitée. En service (lorsque le dispositif DIS est branché à la prise d'alimentation électrique EPL), le dispositif DIS peut alors piloter le module de commande COM1 de l'équipement RAD par une communication par courants porteurs en ligne. De même, l'utilisateur peut activer à distance, via son terminal TER, l'équipement AL pour commencer une détection de risque. Ainsi, le dispositif DIS, en service, pilote le module de commande COM2 de l'équipement AL pour activer un ou plusieurs capteurs de cet équipement, via la une liaison radiofréquence RF. En cas de détection positive, le deuxième module de communication MOD2 remonte un message d'alerte DET au dispositif DIS qui le relaye au terminal TER via un ou plusieurs serveurs.

On comprendra ainsi que le dispositif DIS au sens de l'invention peut être conformé initialement pour communiquer avec le premier module de commande COM1. Par exemple, il peut être préprogrammé pour intégrer dès sa mise en service les fonctionnalités informatiques du premier module de communication MOD1, ainsi que les fonctionnalités de communication via le réseau étendu RE (grâce à l'interface de communication INT). Au sens de l'invention, on ajoute au dispositif DIS un module de liaison ML lui permettant en outre une communication avec un autre équipement AL que l'équipement RAD, via le deuxième module de communication MOD2. On peut ajouter ainsi au dispositif DIS des éléments hardware (comme la connexion USBP ou l'antenne radiofréquence ARF) et des éléments software, tel que le module de liaison ML pour interpréter les trames de communication avec le deuxième module de communication MOD2 et les traduire dans une forme de trame adaptée pour une communication via le réseau étendu RE.

On peut noter en outre qu'une réalisation possible, variante de celle représentée sur les figures, peut consister en un dispositif communiquant via le même medium avec les premier et deuxième modules de commande COM1 et COM2, par exemple par radiofréquence. Dans ce cas, les moyens physiques de communication du dispositif sont déjà présents pour la communication avec le premier module de commande COM1. Il suffit d'ajouter en particulier un module informatique MOD2 de communication avec le deuxième module de commande COM2 pour interpréter et mettre en forme selon un protocole de communication et un format approprié (par exemple spécifique au constructeur de l'équipement AL) les trames échangées entre le dispositif DIS et le deuxième module de commande COM2. A cet effet, une mémoire MEM (de préférence permanente) du dispositif DIS peut être programmée pour effectuer cette traduction/adaptation des trames, de manière à rendre compatible le dispositif DIS pour une communication avec le deuxième module de commande COM2. En variante, cette mémoire peut être comprise dans une forme de clé USB tandis que le dispositif DIS comporte dès sa fabrication une fiche femelle de connexion USB reliée au module de liaison ML comme représenté sur la figure 2.

De même, le serveur SER1 peut agir en tant que serveur principal et adapter les données à communiquer au serveur SER2, par exemple selon un format prédéterminé d'un constructeur de l'équipement comportant le deuxième module de commande COM2.

Ainsi, en référence à la figure 4, sur réception à l'étape S1 de données issues de l'un des premier et deuxième modules de communication MOD1, MOD2, le dispositif DIS (par exemple le processeur PROC en coopération avec une mémoire MEM programmée à cet effet) analyse le format de communication de ces données au test T2. Si ce format correspond à une émission du module de commande COM1, à l'étape S3, le dispositif détermine que ces données sont destinées à être relayées vers le serveur principal SER1 en charge de la gestion de l'équipement RAD (flèches en traits pointillés de la figure 4). Si le format des données reçues correspond à une émission du module de commande COM2, à l'étape S4, le dispositif détermine que ces données sont destinées à être relayées vers le serveur SER2 en charge de la gestion de l'équipement AL (flèches en traits pleins). À l'étape S5, le dispositif adapte ces données pour une communication via le réseau étendu RE. Sur réception de ces données à l'étape S6 auprès du serveur principal SER1, ce dernier peut adapter encore les données reçues, à l'étape S7, avant de les transmettre au serveur SER2 à l'étape S8 (pour les rendre conformes à un format de communication propre au constructeur de l'équipement AL).

Il convient de noter que les étapes de la figure 4 sont réversibles. Ainsi, à l'étape S1, sur réception de données issues du réseau étendu RE, le dispositif DIS peut analyser ces données au test T2 et déterminer si elles sont destinées à être communiquées au premier module de commande COM1 à l'étape S3 ou au deuxième module de commande COM2 à l'étape S4. Dans ce cas, à l'étape S5, une adaptation de format peut être réalisée pour rendre ces données compatibles avec un format de communication propre au constructeur de l'équipement AL et convenant au deuxième module de commande COM2.

Bien entendu, la présente invention ne se limite pas aux formes de réalisation décrites ci-avant à titre d'exemple ; elle s'étend à d'autres variantes.

Par exemple, on a décrit ci-avant une forme de réalisation dans laquelle on prévoit un unique module supplémentaire de communication MOD2. Bien entendu, il peut être prévu une pluralité de modules de communication supplémentaires, avec autant de modules de liaison ML et éventuellement de fiches femelles de connexion USB.

Par ailleurs, comme indiqué précédemment les médias de communication avec les premier et deuxième modules de commande COM1 et COM2 peuvent être identiques (par exemple par liaison radiofréquence tous les deux) ou différents (par exemple, l'un étant par courants porteurs en ligne et l'autre, par radiofréquence).

## Revendications

1. Procédé de mise en communication d'équipements domotiques avec un réseau étendu, dans lequel au moins un premier équipement domotique est mis en communication avec un réseau étendu, via un dispositif de commande comportant un premier module de communication avec le premier équipement selon une première forme de communication,
**caractérisé en ce que** le procédé comporte les étapes ci-après, mises en œuvre par le dispositif de commande, le dispositif de commande étant relié à un deuxième module de communication, additionnel, pour communiquer avec un deuxième équipement domotique selon une deuxième forme de communication, pour une mise en communication du deuxième équipement domotique au réseau étendu, ledit deuxième module étant opérationnel par connexion à une alimentation électrique, de type USB, et l'un des éléments parmi ledit dispositif et le deuxième équipement domotique comportant une prise USB pour accueillir la connexion du deuxième module :
- sur réception de données du réseau étendu, identifier un destinataire desdites données parmi le premier et le deuxième équipement, et
∘ sur identification du deuxième équipement en tant que destinataire des données, mettre en œuvre le deuxième module pour communiquer lesdites données au deuxième équipement selon ladite deuxième forme de communication,
∘ sur identification du premier équipement en tant que destinataire des données, mettre en œuvre le premier module pour communiquer lesdites données au premier équipement selon ladite première forme de communication.

2. Procédé selon la revendication 1, **caractérisé en ce qu'**il comporte en outre, sur réception de données issues de l'un des premier et deuxième équipements, une reconnaissance d'une forme de communication parmi les première et deuxième formes de communication, et
- sur reconnaissance de la deuxième forme de communication, une mise en œuvre du deuxième module pour communiquer lesdites données au réseau étendu,
- sur reconnaissance de la première forme de communication, une mise en œuvre du premier module pour communiquer lesdites données au réseau étendu.

3. Procédé selon l'une des revendications précédentes, **caractérisé en ce que** les première et deuxième formes de communication diffèrent par au moins un élément parmi un type de médium de communication utilisé, un protocole de communication, un format des données communiquées.

4. Procédé selon la revendication 3, **caractérisé en ce que** l'une des première et deuxième formes de communication utilise un médium de type courants porteurs en ligne, tandis que l'autre des première et deuxième formes de communication utilise un médium de type radiofréquence.

5. Procédé selon la revendication 3, **caractérisé en ce que** les première et deuxième formes de communication utilisent un médium de type radiofréquence, et **en ce que** l'une des première et deuxième formes de communication utilise un protocole parmi Wi-Fi, Zigbee, Bluetooth, tandis que l'autre des première et deuxième formes de communication utilise un autre protocole parmi Wi-Fi, Zigbee, Bluetooth.

6. Procédé selon l'une des revendications 3 à 5, **caractérisé en ce que** la première forme de communication utilise un premier format de données, propre à un constructeur du premier équipement, tandis que la deuxième forme de communication utilise un deuxième format de données, propre à un constructeur du deuxième équipement, et différent du premier format.

7. Procédé selon l'une des revendications précédentes, **caractérisé en ce que**, le dispositif de commande comportant un module de formatage de données issues du premier équipement pour être transmises au réseau étendu, le deuxième module de communication comporte un module d'adaptation des données issues du deuxième équipement pour être interprétées par le module de formatage pour une transmission au réseau étendu.

8. Procédé selon la revendication 7, prise en combinaison avec la revendication 6, **caractérisé en ce que**, les données issues du dispositif de commande et transmises via le réseau étendu étant reçues auprès d'un serveur principal capable de transmettre les données issues du premier équipement à un serveur d'un constructeur du premier équipement, ledit serveur principal comporte un module d'adaptation des données issues du deuxième équipement pour être communiquées selon le deuxième format à un serveur d'un constructeur du deuxième équipement.

9. Procédé selon la revendication 8, **caractérisé en ce que** le serveur principal est agencé en outre pour adapter les données reçues du dispositif de commande pour une communication desdites données à un terminal à disposition d'un utilisateur des premier et deuxième équipements.

10. Procédé selon l'une des revendications précédentes, **caractérisé en ce que** le dispositif de commande comporte une prise femelle de type USB pour accueillir la connexion du deuxième module.

11. Procédé selon l'une des revendications précédentes, **caractérisé en ce que** le dispositif de commande comporte une prise femelle de type USB pour accueillir la connexion du deuxième module, et **en ce que** le deuxième module communique avec le dispositif de commande par ladite connexion USB.

12. Procédé selon l'une des revendications 1 à 10, **caractérisé en ce que** le deuxième module communique avec le dispositif de commande par une liaison radiofréquence.

13. Procédé selon l'une des revendications 1 à 4, **caractérisé en ce que** le deuxième module communique avec le dispositif de commande par courants porteurs en ligne.

14. Dispositif de commande comprenant des moyens pour la mise en œuvre du procédé selon l'une des revendications précédentes, **caractérisé en ce qu'**il comporte un module de liaison avec le deuxième module de communication, additionnel.

15. Programme informatique **caractérisé en ce qu'**il comporte des instructions pour la mise en œuvre du procédé selon l'une des revendications 1 à 13, lorsque ce programme est exécuté par un processeur.

## Patentansprüche

1. Verfahren zum Inverbindungbringen von Heimautomationseinrichtungen mit einem Fernbereichsnetz, bei dem mindestens eine erste Heimautomationseinrichtung mit einem Fernbereichsnetz über eine Steuervorrichtung in Verbindung gebracht wird, die ein erstes Kommunikationsmodul zur Kommunikation mit der ersten Einrichtung gemäß einer ersten Kommunikationsform umfasst,
**dadurch gekennzeichnet, dass** das Verfahren die nachfolgenden Schritte umfasst, die von der Steuervorrichtung ausgeführt werden, wenn die Steuervorrichtung mit einem zweiten, zusätzlichen Kommunikationsmodul verbunden ist, um mit einer zweiten Hausautomationseinrichtung gemäß einer zweiten Kommunikationsform zu kommunizieren, für ein Inverbindungbringen der zweiten Heimautomationseinrichtung mit dem Fernbereichsnetz, wobei das zweite Modul durch Anschließen an eine Stromversorgung vom USB-Typ betriebsbereit ist und das eine der Elemente unter der Vorrichtung und der zweiten Heimautomationseinrichtung einen USB-Anschluss zum Aufnehmen des Verbinders des zweiten Moduls umfasst:
- beim Empfangen von Daten vom Fernbereichsnetz Identifizieren eines Empfängers dieser Daten unter der ersten und der zweiten Einrichtung und
∘ beim Identifizieren der zweiten Einrichtung als Empfänger der Daten Einsetzen des zweiten Moduls, um die Daten an die zweite Einrichtung gemäß der zweiten Kommunikationsform zu kommunizieren,
∘ beim Identifizieren der ersten Einrichtung als Empfänger der Daten Einsetzen des ersten Moduls, um die Daten an die erste Einrichtung gemäß der ersten Kommunikationsform zu kommunizieren.

2. Verfahren nach Anspruch 1, **dadurch gekennzeichnet, dass** es ferner beim Empfangen von Daten, die von einer der ersten und zweiten Einrichtungen stammen, eine Erkennung einer Kommunikationsform unter den ersten und zweiten Kommunikationsformen umfasst, und
- beim Erkennen der zweiten Kommunikationsform ein Einsetzen des zweiten Moduls, um die Daten an das Fernbereichsnetz zu kommunizieren,
- beim Erkennen der ersten Kommunikationsform ein Einsetzen des ersten Moduls, um die Daten an das Fernbereichsnetz zu kommunizieren.

3. Verfahren nach einem der vorhergehenden Ansprüche, **dadurch gekennzeichnet, dass** die ersten und zweiten Kommunikationsformen sich durch mindestens ein Element unter einem verwendeten Kommunikationsmedium, einem Kommunikationsprotokoll, einem Format der übertragenen Daten unterscheiden.

4. Verfahren nach Anspruch 3, **dadurch gekennzeichnet, dass** die eine der ersten und zweiten Kommunikationsformen ein Medium vom Powerline-Typ verwendet, während die andere der ersten und zweiten Kommunikationsformen ein Medium vom Funk-Typ verwendet.

5. Verfahren nach Anspruch 3, **dadurch gekennzeichnet, dass** die ersten und zweiten Kommunikationsformen ein Medium vom Funk-Typ verwenden und dass die eine der ersten und zweiten Kommunikationsformen ein Protokoll unter WLAN, Zigbee, Bluetooth verwendet, während die andere der ersten und zweiten Kommunikationsformen ein anderes Protokoll unter WLAN, Zigbee, Bluetooth verwendet.

6. Verfahren nach einem der Ansprüche 3 bis 5, **dadurch gekennzeichnet, dass** die erste Kommunikationsform ein erstes proprietäres Datenformat eines Herstellers der ersten Einrichtung verwendet, während die zweite Kommunikationsform ein zweites proprietäres Datenformat eines Herstellers der zweiten Einrichtung verwendet, das vom ersten Format verschieden ist.

7. Verfahren nach einem der vorhergehenden Ansprüche, **dadurch gekennzeichnet, dass**, wenn die Steuervorrichtung ein Modul zur Formatierung der Daten umfasst, die aus der ersten Einrichtung stammen, um an das Fernbereichsnetz übertragen zu werden, das zweite Kommunikationsmodul ein Modul zur Adaption der Daten umfasst, die aus der zweiten Einrichtung stammen, um vom Formatierungsmodul zur Übertragung an das Fernbereichsnetz interpretiert zu werden.

8. Verfahren nach Anspruch 7 in Kombination mit Anspruch 6, **dadurch gekennzeichnet, dass**, wenn die aus der Steuervorrichtung stammenden und über das Fernbereichsnetz übertragenen Daten bei einem Hauptserver empfangen werden, der in der Lage ist, die aus der ersten Einrichtung stammenden Daten an einen Server eines Herstellers der ersten Einrichtung zu übertragen, der Hauptserver ein Modul zur Adaption der Daten umfasst, die aus der zweiten Einrichtung stammen, um gemäß dem zweiten Format an einen Server eines Herstellers der zweiten Einrichtung übertragen zu werden.

9. Verfahren nach Anspruch 8, **dadurch gekennzeichnet, dass** der Hauptserver ferner dazu eingerichtet ist, die von der Steuervorrichtung empfangenen Daten für eine Kommunikation dieser Daten an ein Endgerät zu adaptieren, das einem Benutzer der ersten und zweiten Einrichtungen zur Verfügung steht.

10. Verfahren nach einem der vorhergehenden Ansprüche, **dadurch gekennzeichnet, dass** die Steuervorrichtung eine Anschlussbuchse vom USB-Typ umfasst, um den Verbinder des zweiten Moduls aufzunehmen.

11. Verfahren nach einem der vorhergehenden Ansprüche, **dadurch gekennzeichnet, dass** die Steuervorrichtung eine Anschlussbuchse vom USB-Typ umfasst, um den Verbinder des zweiten Moduls aufzunehmen, und dass das zweite Modul mit der Steuervorrichtung über den USB-Verbinder kommuniziert.

12. Verfahren nach einem der Ansprüche 1 bis 10, **dadurch gekennzeichnet, dass** das zweite Modul mit der Steuervorrichtung über eine Funkverbindung kommuniziert.

13. Verfahren nach einem der Ansprüche 1 bis 4, **dadurch gekennzeichnet, dass** das zweite Modul mit der Steuervorrichtung über Powerline kommuniziert.

14. Steuervorrichtung mit Mitteln zum Ausführen des Verfahrens nach einem der vorhergehenden Ansprüche, **dadurch gekennzeichnet, dass** sie ein zusätzliches Modul zum Verbinden mit dem zweiten Kommunikationsmodul umfasst.

15. Computerprogramm, **dadurch gekennzeichnet, dass** es Befehle umfasst, die bei der Ausführung des Programms durch einen Prozessor das Verfahren nach einem der Ansprüche 1 bis 13 ausführen.

## Claims

1. Method for connecting home-automation equipment with a wide area network, in which at least one first home-automation equipment item is connected with a wide area network, via a control device comprising a first communication module for communicating with the first equipment item according to a first form of communication, **characterized in that** the method comprises the following steps, implemented by the control device, the control device being linked to a second, additional communication module, to communicate with a second home-automation equipment item according to a second form of communication, for connecting the second home-automation equipment item to the wide area network, said second module being operational by connection to an electrical power supply, of USB type, and one of the elements out of said device and the second home-automation equipment item comprising a USB port for accommodating the connection of the second module:
- on reception of data from the wide area network, identifying a recipient of said data out of the first equipment item and the second equipment item, and
∘ on identification of the second equipment item as recipient of the data, implementing the second module to communicate said data to the second equipment item according to said second form of communication,
∘ on identification of the first equipment item as recipient of the data, implementing the first module to communicate said data to the first equipment item according to said first form of communication.

2. Method according to Claim 1, **characterized in that** it further comprises, on reception of data from one of the first and second equipment items, a recognition of a form of communication out of the first and second forms of communication, and
- on recognition of the second form of communication, an implementation of the second module to communicate said data to the wide area network,
- on recognition of the first form of communication, an implementation of the first module to communicate said data to the wide area network.

3. Method according to one of the preceding claims, **characterized in that** the first and second forms of communication differ by at least one element out of a type of communication medium used, a communication protocol, a format of the communicated data.

4. Method according to Claim 3, **characterized in that** one of the first and second forms of communication uses a medium of powerline communication type, whereas the other of the first and second forms of communication uses a medium of radiofrequency type.

5. Method according to Claim 3, **characterized in that** the first and second forms of communication use a medium of radiofrequency type, and **in that** one of the first and second forms of communication uses a protocol out of Wi-Fi, Zigbee, Bluetooth, whereas the other of the first and second forms of communication uses another protocol out of Wi-Fi, Zigbee, Bluetooth.

6. Method according to one of Claims 3 to 5, **characterized in that** the first form of communication uses a first data format, specific to a manufacturer of the first equipment item, whereas the second form of communication uses a second data format, specific to a manufacturer of the second equipment item, and different from the first format.

7. Method according to one of the preceding claims, **characterized in that**, the control device comprising a module for formatting data from the first equipment item to be transmitted to the wide area network, the second communication module comprises a module for adapting data from the second equipment item to be interpreted by the formatting module for a transmission to the wide area network.

8. Method according to Claim 7, taken in combination with Claim 6, **characterized in that**, the data from the control device and transmitted via the wide area network being received from a main server capable of transmitting the data from the first equipment item to a server of a manufacturer of the first equipment item, said main server comprises a module for adapting data from the second equipment item to be communicated according to the second format to a server of a manufacturer of the second equipment item.

9. Method according to Claim 8, **characterized in that** the main server is arranged also to adapt the data received from the control device for a communication of said data to a terminal available to a user of the first and second equipment items.

10. Method according to one of the preceding claims, **characterized in that** the control device comprises a female port of USB type to accommodate the connection of the second module.

11. Method according to one of the preceding claims, **characterized in that** the control device comprises a female port of USB type to accommodate the connection of the second module, and **in that** the second module communicates with the control device by said USB connection.

12. Method according to one of Claims 1 to 10, **characterized in that** the second module communicates with the control device by a radiofrequency link.

13. Method according to one of Claims 1 to 4, **characterized in that** the second module communicates with the control device by powerline communication.

14. Control device comprising means for implementing the method according to one of the preceding claims, **characterized in that** it comprises a module for linking with the second, additional communication module.

15. Computer program, **characterized in that** it comprises instructions for implementing the method according to one of Claims 1 to 13, when this program is executed by a processor.
